# EUROPÄISCHE PATENTSCHRIFT

(11) **EP 1 085 303 B1**
(45) Veröffentlichungstag und Bekanntmachung des Hinweises auf die Patenterteilung: **04.01.2006**
(21) Anmeldenummer: 00116938.2
(22) Anmeldetag: 05.08.2000
(51) Int. Cl.: G01F 15/00, G01F 15/14

(54) **Wasserzähler**
Watermeter
Compteur d'eau

(30) Priorität: 15.09.1999 DE 19944087
(43) Veröffentlichungstag der Anmeldung: 21.03.2001
(73) Patentinhaber: M & FC Holding LLC, Raleigh, NC 27 615 (US)
(72) Erfinder: Lang, Gerhard, 67134 Birkenheide (DE); Hege, Gerhard, Dipl.-Ing., 67245 Lambsheim (DE)
(74) Vertreter: Patentanwälte Möll und Bitterich

(56) Entgegenhaltungen:
- DE-A- 4 121 056
- DE-A- 19 746 153
- FR-A- 2 196 732
- GB-A- 2 307 048

## Beschreibung

Die Erfindung betrifft einen Wasserzähler gemäß dem Oberbegriff des Anspruchs 1.

Wasserzähler unterliegen den einschlägigen eichamtlichen Bestimmungen. Diese Bestimmungen sehen unter anderem vor, dass jeder Zähler eine individuelle, ihm eindeutig zugeordnete Kennzeichnung aufweisen muss. Diese Kennzeichnung muss eine hohe Sicherheit gegen Fälschung und Entfemung haben. Hierzu ist es üblich, die Kennzeichnung auf einen flanschartigen, eine Sichtöffnung zur Sichtscheibe hin umschließenden Ringbund eines die Sichtscheibe druckdicht verspannenden Schraubrings einzuprägen oder einzugravieren. Dies muss vor der Montage der Einzelteile erfolgen. Nach der Montage und Jusüerung des Messwerks muss der Zählerhersteller zu jedem Zähler bzw. zu dem jeweils eingebauten Messwerk ein Prüfprotokoll erstellen, dem die jeweilige Kennzeichnung zuzuordnen ist. Diese Prüfprotokolle muss der Hersteller über eine vorgeschriebene Zeit hinweg aufbewahren, damit im Falle einer Reklamation die ordnungsgemäße Funktion des jeweiligen Zählers nachgewiesen werden kann.

Sehr oft verlangen die Wasserversorgungsuntemehmen, dass die ihnen gelieferten Wasserzähler mit kundenspezifischen Kennzeichnungen versehen werden. In diesen Fällen können die Wasserzähler erst nach Vorlage der konkreten Bestellung montiert, justiert und geprüft werden. Dadurch ist eine kontinuieniche Produktion nicht möglich. Das ist unbefriedigend.

Es hat nicht an Versuchen gefiehlt, das Anbringen der Kennzeichnungen flexibler zu gestalten. In der DE-Auslegeschrift 22 39 909 und in dem DE-Gebrauchsmuster 72 03 114 wird vorgeschlagen, die Kennzeichnungen auf einen getrennten Datenträger aufzubringen, der zwischen dem Zifferblatt des Zählwerks und dem den Wasserzähler wasserdicht verschließenden Druckglas angebracht wird. Durch geeignete Gestaltung der Datenträger ist sichergestellt, dass die Verbrauchsanzeige ablesbar bleibt. Aufgrund der Anordnung der Datenträger unterhalb des Druckglases kann der Wasserzähler erst dann messtechnisch geprüft und beglaubigt bzw. geeicht werden, wenn das Zählergehäuse komplett geschlossen ist. Dadurch ist der Datenträger nicht mehr zugänglich, so dass weitere, insbesondere kundenspezifische Kennzeichnungen nicht mehr angebracht werden können. Das ist unbefriedigend.

Aus der DE-C 197 46 153 ist ein Wasserzähler bekannt, bei dem ein die Kennzeichnung tragendes Kennzeichnungsteil nachträglich von außen am fertig montierten Wasserzähler angebracht werden kann. Es handelt sich dabei um einen Kunststoffring, der auf den Innendurchmesser des überwurfmutterartigen Schraubrings aufgerastet wird, der die Sichtscheibe des Zählwerks druckdicht auf das Gehäuse des Zählwerks presst. Um Platz für die Schnapphaken des Kunststoffrings zu schaffen, muss die Dichtung zwischen Druckring und Sichtscheibe schmäler ausgebildet werden. Dadurch verringert sich jedoch die Stabilität bzw. Festigkeit der Sichtscheibe.

Ein weiterer Nachteil der bekannten Lösung ist, dass sie nur bei Wasserzählem einsetzbar ist, bei denen die Sichtscheibe mittels eines überwurfmutterartigen Schraubrings gehalten wird. Es gibt jedoch eine Vielzahl von Wasserzähler Konstruktionen, bei denen ein solcher Schraubring nicht vorhanden ist Man vergleiche beispielsweise die DE-C 41 21 056.

Der vorliegenden Erfindung liegt daher die Aufgabe zugrunde, einen universell zu verwendenden, nachträglich zu montierenden, manipulationssicheren Kennzeichenträger für Wasserzähler anzugeben.

Diese Aufgabe wird gelöst durch einen Wasserzähler mit den Merkmalen des Anspruchs 1.

Die vorliegende Erfindung nutzt die Tatsache aus, dass jeder Wasserzähler mit einem Klappdeckel ausgerüstet ist, der die Sichtscheibe auf dem Zählwerk abdeckt. Die Klappdeckel sind mit Hilfe eines als Schwenkachse dienenden Querstiftes zwischen Konsolen gelagert. Je nach Wasserzähler-Konstruktion befinden sich die Konsolen auf dem Schraubring (DE- C 197 46 153) oder auf der Sichtscheibe (DE-C 41 21 056). Wichtig ist, dass der als Schwenkachse dienende Stift nicht unbemerkt entfernt werden kann. Dies ist bei der DE-C 41 21 056 dadurch realisiert, dass der Stift in einer Sackbohrung sitzt.

Falls der Querstift zwischen den Konsolen frei liegen sollte, kann der Zugang durch eine aufgesteckte Sicherungshülse verhindert werden. Diese Sicherungshülse stützt sich beidseitig gegen die Konsolen bzw. die Haltestege ab.

Vorzugsweise ist die Sicherungshülse einstückig mit dem Klappdeckel ausgebildet, wobei der Querstift gleichzeitig die Schwenkachse für den Deckel bildet.

Gemäß einer Weiterbildung der Erfindung besitzen die Haltestege einen winkelförmigen Querschnitt. Dadurch umschließen sie die Konsolen formschlüssig, wodurch die Stabilität und die Manipulationssicherheit erhöht werden.

Je nach Ausführungsform können die Öffnungen, durch die der Stift gesteckt wird, als Schlitze oder als Bohrungen ausgebildet sein. Schlitze lassen sich spritztechnisch einfacher herstellen als Bohrungen, ohne dass die Manipulationssicherheit darunter leidet.

Vorzugsweise ist der Flächenbereich des Kennzeichenträgers der Sichtscheibe angepasst. Dadurch liegt der Kennzeichenträger flach an der Sichtscheibe an, ohne zu stören.

Gemäß einer bevorzugten Weiterbildung der Erfindung ist der sich zwischen die Konsolen erstreckende Teil des Kennzeichenträgers leicht federnd ausgebildet und kooperiert mit dem Klappdeckel. Dadurch bleibt der Klappdeckel in der Offenstellung stehen, was das Ablesen des Zählerstandes erleichtert.

Anhand der Zeichnung soll die Erfindung in Form eines Ausführungsbeispiels näher erläutert werden. Es zeigen
- Fig. 1: eine Draufsicht auf einen Kennzeichenträger,
- Fig. 2: einen Schnitt durch den Kennzeichenträger der Fig. 1 entlang der Linie II-II,
- Fig.3: eine Schrägansicht des Kennzeichenträgers der Fig. 1,
- Fig. 4: einen Schnitt durch den Kennzeichenträger der Fig. 1 entlang der Linie IV-IV,
- Fig. 5: eine alternative Ausführungsform zur Fig. 4 und
- Fig. 6: einen Schnitt durch die Sichtscheibe eines Wasserzählers mit montiertem Kennzeichenträger und Klappdeckel.

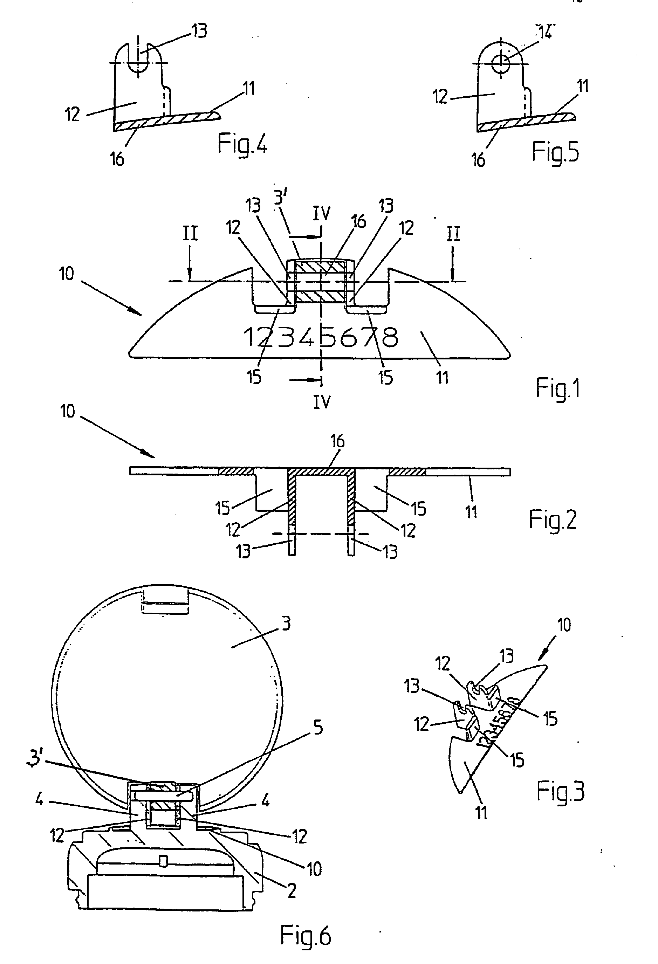

Fig. 1 als Draufsicht, Fig. 2 als Schnitt entlang der Linie II-II und Fig. 3 als Schrägansicht zeigen einen aus Kunststoff gespritzten Kennzeichenträger .10. Man erkennt einen Flächenbereich 11, auf dem das Kennzeichen, z. B. die Zählemummer, aufgebracht ist Des weiteren sind vorgesehen einen winkelförmigen Querschnitt aufweisende Haltestege 12, 15, die an ihrem oberen Ende Schlitze 13 besitzen. Man vergleiche insbesondere Fig. 4.

Wie Fig. 5 zeigt, können anstelle der Schlitze 13 auch Bohrungen 14 vorgesehen sein.

Zwischen den Haltestegen 12 erkennt man geschnitten dargestellt eine Sicherungshülse 3', die den Zugang zu einem Querstift 5 verhindert Einzelheiten sollen anhand der Fig. 6 erläutert werden.

Fig. 6 zeigt einen Schnitt durch die Sichtscheibe 2 eines Wasserzählers hergestellt aus Kunststoffe, vorzugsweise transparent. Die Sichtscheibe 2 trägt angespritzte Konsolen 4, zwischen denen mit Hilfe des Querstiftes 5 ein Klappdeckel 3 schwenkbar gelagert ist. Die Sicherungshülse 3' ist Teil des Klappdeckels 3. Der Kennzeichenträger 10 ist so zwischen die Konsolen 4 geschoben, dass die Haltestege 12, 15 formschlüssig an den Konsolen 4, der Flächenbereich 11 formschlüssig an der Sichtscheibe 2 anliegen. Sobald nun der als Schwenkachse für den Klappdeckel 3 dienende Stift 5 unlösbar in einer Sackbohrung der Konsolen 4 montiert ist, ist auch der Kennzeichenträger 10 unlösbar fixiert Sollte durch unachtsame Handhabung der Klappdeckel 3 abgebrochen werden, so bleibt die Manipulationssicherheit des Kennzeichenträgers 10 unverändert gewahrt.

## Patentansprüche

1. Wasserzähler, im wesentlichen umfassend
- ein Zählergehäuse mit einem Messwerk und einem Zählwerk,
- das Zählwerk besitzt eine Sichtscheibe (2), die den Blick auf die Verbrauchsanzeige ermöglicht,
- die Sichtscheibe (2) ist mittels Klappdeckel (3) abdeckbar,
- auf bzw. neben der Sichtscheibe (2) sind wenigstens zwei Konsolen (4) angebracht,
- der Klappdeckel (3) ist mit Hilfe eines Stiftes (5) zwischen den Konsolen gelagert,
- ein separat hergestelltes Formteil als Kennzeichenträger (10)
- trägt die Zählernummer und
- ist formschlüssig und unlösbar bzw. gegen nachträgliches unbeabsichtigtes Entfernen gesichert angebracht,
**gekennzeichnet durch** die Merkmale:
- der Kennzeichenträger (10) umfasst
- einen die Zählernummer tragenden, sich zwischen die Konsolen (4) erstreckenden Flächenbereich (11, 16) und
- an den Konsolen (4) anliegende Haltestege (12, 15),
- der Stift (5) ist quer und unlösbar **durch** die Konsolen (4) gesteckt,
- die Haltestege (12) besitzen Öffnungen (13, 14), die mit dem Stift (5) korrespondieren,
- der Stift (5) fixiert das Formteil (10) unlösbar.

2. Wasserzähler nach Anspruch 1, **gekennzeichnet durch** die Merkmale:
- eine Sicherungshülse (3')
- stützt sich beidseitig gegen die Konsolen (4) bzw. die Haltestege (12)
- und verhindert den Zugang zum Stift (5).

3. Wasserzähler nach Anspruch 2, **gekennzeichnet durch** die Merkmale:
- der Stift (5) ist die Schwenkachse des Klappdeckels (3),
- die Sicherungshülse ist Teil des Klappdeckels.

4. Wasserzähler nach einem der Ansprüche 1 bis 3, **gekennzeichnet durch** das Merkmal:
- die Haltestege (12, 15) besitzen einen winkelförmigen Querschnitt.

5. Wasserzähler nach einem der Ansprüche 1 bis 4, **gekennzeichnet durch** das Merkmal:
- die Öffnungen sind Schlitze (13).

6. Wasserzähler nach einem der Ansprüche 1 bis 4, **gekennzeichnet durch** das Merkmal:
- die Öffnungen sind Bohrungen (14).

7. Wasserzähler nach einem der Ansprüche 1 bis 6, **gekennzeichnet durch** das Merkmal:
- der Flächenbereich (11) ist der Sichtscheibe (2) angepasst.

8. Wasserzähler nach einem der Ansprüche 1 bis 7, **gekennzeichnet durch** das Merkmal:
- der sich zwischen die Konsolen (4) erstreckende Teil (16) des Flächenbereiches (11)
- ist leicht fedemd ausgebildet
- und kooperiert mit dem Klappdeckel (3).

## Claims

1. Water meter, essentially comprising
- a meter housing with a measuring mechanism and a counting mechanism,
- the counting mechanism has an observation window (2) which allows the consumption indicator to be viewed,
- the observation window (2) can be covered by means of a hinged cover (3), at least two brackets (4) are fitted on or next to the observation window (2),
- the hinged cover (3) is mounted by means of a pin (5) between the brackets,
- a separately produced moulded part, as marking carrier (10),
- bears the meter count and
- is fitted positively and in a non-releasable manner or so as to be secured against subsequent unintentional removal,
**characterised by** the features:
- the marking carrier (10) comprises
- a flat region (11, 16), which bears the meter count and extends between the brackets (4), and
- retaining webs (12, 15) lying against the brackets (4),
- the pin (5) is passed transversely through the brackets (4) such that it cannot be released,
- the retaining webs (12) have openings (13, 14) which correspond with the pin (5),
- the pin (5) fixes the moulded part (10) such that it cannot be released.

2. Water meter according to Claim 1, **characterised by** the features:
- a safety sleeve (3')
- is supported on both sides against the brackets (4) or the retaining webs (12)
- and inhibits access to the pin (5).

3. Water meter according to Claim 2, **characterised by** the features:
- the pin (5) is the pivot axis of the hinged cover (3),
- the safety sleeve is part of the hinged cover.

4. Water meter according to any one of Claims 1 to 3, **characterised by** the feature:
- the retaining webs (12, 15) have an angular cross section.

5. Water meter according to any one of Claims 1 to 4, **characterised by** the feature:
- the openings are slots (13).

6. Water meter according to any one of Claims 1 to 4, **characterised by** the feature:
- the openings are bores (14).

7. Water meter according to any one of Claims 1 to 6, **characterised by** the feature:
- the flat region (11) is adapted to the observation window (2).

8. Water meter according to any one of Claims 1 to 7, **characterised by** the feature:
- the part (16) of the flat region (11) extending between the brackets (4)
- is formed so as to be slightly resilient
- and co-operates with the hinged cover (3).

## Revendications

1. Compteur d'eau, comprenant essentiellement,
- un carter de compteur avec un appareil de mesure et un compteur,
- le compteur présente un disque transparent (2), qui permet la vue sur l'affichage de consommation,
- le disque transparent (2) peut être masqué au moyen d'un couvercle pliant (3),
- au moins deux consoles (4) sont placées sur ou à côté du disque transparent (2),
- le couvercle pliant (3) est fixé à l'aide d'une goupille (5) entre les consoles,
- une pièce moulée fabriquée séparément en tant que support d'identification (10),
- porte le numéro de compteur et
- est placée par complémentarité de forme et de façon indétachable ou protégée contre un enlèvement involontaire ultérieur,
**caractérisé en ce que** :
- le support d'identification (10) comprend
- une zone de surface (11, 16) portant le numéro de compteur et s'étendant entre les consoles (4) et
- des nervures de maintien (12, 15) contiguës aux consoles (4),
- la goupille (5) est emboîtée transversalement et de façon indétachable à travers les consoles (4),
- les nervures de maintien (12) présentent des orifices (13, 14) qui correspondent à la goupille (5),
- la goupille (5) fixe la pièce moulée (10) de façon indétachable.

2. Compteur d'eau selon la revendication 1, **caractérisé en ce que** :
- un manchon de blocage (3') - s'appuie des deux côtés contre les consoles (4) ou les nervures de maintien (12)
- et empêche l'accès à la goupille (5).

3. Compteur d'eau selon la revendication 2, **caractérisé en ce que** :
- la goupille (5) est l'axe de pivotement du couvercle pliant (3),
- la douille de blocage fait partie du couvercle pliant.

4. Compteur d'eau selon l'une des revendications 1 à 3, **caractérisé en ce que** :
- les nervures de maintien (12, 15) présentent une section en forme d'angle.

5. Compteur d'eau selon l'une des revendications 1 à 4, **caractérisé en ce que** :
- les orifices sont des fentes (13).

6. Compteur d'eau selon l'une des revendications 1 à 4, **caractérisé en ce que** :
- les orifices sont des alésages (14).

7. Compteur d'eau selon l'une des revendications 1 à 6, **caractérisé en ce que** :
- la zone de surface (11) est adaptée au disque transparent (2).

8. Compteur d'eau selon l'une des revendications 1 à 7, **caractérisé en ce que** :
- la partie (16), s'étendant entre les consoles (4), de la zone de surface (11)
- est conçue de façon légèrement élastique
- et coopère avec le couvercle pliant (3).
